# EUROPEAN PATENT APPLICATION

(11) **EP 1 947 787 A1**
(43) Date of publication of application: **23.07.2008**
(21) Application number: 08103760.8
(22) Date of filing: 12.12.2003
(51) Int. Cl.: H04B 10/13, H04B 7/26

(54) **An optical communication system for wireless radio signals**

(30) Priority: 13.12.2002 GB 0229238
(62) Divisional of application: 03767990.9
(71) Applicant: University College London, 2-16 Torrington Place London WC1E 7HN (GB); Cambridge Enterprise Limited, Trinity Lane Cambridge Cambridgeshire CB2 1TN (GB)
(72) Inventor: Seeds, Alwyn John, London, Cambridgeshire SW3 6BU (GB); Wake, David, Levington, Suffolk IP10 0LQ (GB); Penty, Richard Vincent, Royston,, Hertfordshire SG8 OQF (GB); Webster, Matthew, Royston, Hertfordshire SG8 5TQ (GB); Hartmann, Peter, Cambridge, Cambridgeshire CD3 0DS (GB); White, Ian Hugh, Cambridge, Cambridgeshire CB3 8AH (GB)
(74) Representative: Neobard, William John

(57) **Abstract**

A method of transmission of radio signals over all types of graded-index multimode fibre is provided. The method comprises launching optical radiation into the core of the multimode fibre away from the centre of the core so as to strongly excite a subset of the available modes of the multimode fibre. The subset of modes excited are within a small number of mode groups and thus have similar propagation constants leading to a reduction in modal dispersion and modal interference and smoothing of the frequency response passband region beyond the fibres specified 3dB base band bandwidth assisting RF transmission and recovery from this region

## Description

### Field of the Invention

The invention relates to an optical communication system and in particular, to an optical communication system involving, multimode fibres installed in or connecting compartmented spaces such as corporate office, buildings, shopping centres, subways and airports.

### Prior Art Known to the Applicant

In-building coverage is an important and growing market for network operators and building owners who wish to deploy cellular radio or wireless LAN systems within buildings. The most effective and efficient way of providing this coverage is to place the base station inside the building and use a distributed antenna system (DAS) to provide a relatively uniform signal strength. DASs can be constructed using coaxial cable, but for longer spans optical fibre is preferred because the insertion loss is virtually independent of link length, simplifying the system design and future extensions.

Analogue optical links using radio over fibre are in use today in many DAS installations around the world. However, these products either use single mode fibre (SMF) to provide the necessary transmission bandwidth or use multimode fibre (MMF) at a down converted intermediate frequency that is within the bandwidth of the multimode fibre. The drawbacks of these approaches are that the first requires specially installed fibre (as the majority of the installed fibre base within buildings is multimode) and the second requires the simultaneous transmission of a low frequency reference tone for stabilising and locking the remote local oscillators required for up-conversion back to the radio carrier. Both approaches result in additional cost and complexity to the transmission equipment and system design.

Multimode fibre has a typical specified bandwidth of 500MHz.km at 1300nm wavelength. This specified bandwidth refers to the over-filled launch condition, where all the available modes in the fibre are excited. By way of illustration, a current third generation mobile system operating around 2GHz would be limited to a DAS length of less than 250m. Lengths such as these have applications within small installations but the majority of DAS applications require substantially larger spans.

The known bandwidth problems associated with multimode fibre are attributed to modal dispersion. Depending on the launch conditions, multimode fibre may have many tens of modes, each travelling at slightly different speeds through the fibre. The phase differences between these modes apparent at the receiver results in interference, and this interference limits the fibre bandwidth. If the number and type of modes are restricted at launch, then modal dispersion can be greatly reduced and the fibre bandwidth can be extended. Where the modal dispersion still effectively limits the bandwidth, it is known that a significant passband response beyond the 3dB bandwidth exists that can be used for the successful transmission of subcarriers or radio signals.

Centre launch, where the optical power from the signal transmitter is coupled into the central (low order) fibre modes using standard connectors and uniters, works very well for many fibres. However a significant proportion of the installed fibre base has very poor performance when used with centre launch, caused by imperfections in the refractive index profile of the fibre core.

It is known that offset launch, where the optical power is coupled into the higher order modes away from the fibre centre, can be used for successful baseband digital transmission in virtually all multimode fibres. This can be achieved using laser sources rather than the more conventional LEDs used in datacommunications systems, as exemplified by the published PCT patent specification no. WO97/3330 entitled 'MULTIMODE COMMUNICATIONS SYSTEMS (HEWLETT PACKARD COMPANY). In the above-mentioned work, offset launch is used to guarantee the specified (over-filled launch) bandwidth by enhancing the performance of some fibres that would otherwise have low bandwidth using conventional launch conditions.

This, however, aims to guarantee bandwidth of multimode fibre for high data transmission rate digital baseband signal based systems (eg. Gigabit Ethernet).

Furthermore, Wake et al showed recently (in Electronics Letters, vol.37, pp. 1087-1089, 2001) that it was possible to transmit radio frequency signals over multimode fibre by operating at frequencies in the flat-band region beyond the 3dB bandwidth of the fibre. This work opened up the possibility that a new type of radio over fibre transmission link was feasible, but stopped short from offering a stable and robust approach to the problem.

The present invention goes beyond both of these examples of prior art; the aim is not to guarantee fibre bandwidth but to ensure that signal transmission over the fibre occurs in a stable operating regime (for both amplitude and phase) not necessarily restricted to the fibre baseband bandwidth. The Wake prior art only demonstrated that radio frequency signal transmission was possible for specific examples of 'good' fibre.

The essence of the present invention is the realisation that stable and robust radio frequency signal transmission can be achieved for all types of graded-index multimode fibre using restricted-mode launch techniques. This would enable successful use of the pre-installed fibre base, typically multimode fibres, within buildings or other compartmented spaces for DAS application. One resulting benefit would be the lack of any basic need to pre-measure fibre performance or indeed to install fibre specifically for this application resulting in low cost DAS installations.

This approach is a fundamental distinction over known existing digital communications systems using offset launch. They are limited to operating within the baseband bandwidth specification of the fibre. They do not suggest, in themselves, any appropriate starting point for the present invention. Nor can they achieve what the invention sets out to achieve.

In addition, most prior art in the field of radio transmission over multimode fibre links has concentrated on spurious-free dynamic range (SFDR) as the major metric of performance. SFDR is defined as the maximum signal to noise ratio that the link can provide for the case where intermodulation distortion power is below the noise floor. SFDR incorporates elements of signal, noise and intermodulation distortion power.

Error vector magnitude (EVM) is a useful measure of signal quality in transmission systems with digital modulation and is often more convenient to measure than bit error ratio. It is generally assumed that a link with good SFDR performance would have good error vector magnitude (EVM) performance. The results obtained from tests of the present invention disprove this, highlighting instead link outages resulting from uacceptably high EVM. These outages occur as a result of high levels of modal phase noise, which is not readily observable from steady-state measurements of SFDR or frequency response. This outage problem is apparent from detailed measurement of EVM and has not been described in the prior art.

Here again, therefore, the invention represents a non-obvious advance over existing preconceptions in the field; with advantageous results flowing from its application.

### Summary of the Invention

An optical communication system comprising:
- one or more optical radiation transmitters;
- a means of coupling optical radiation from the, or each, optical radiation transmitter into a multimode fibre using a launch which restricts the number of modes excited in the fibre and
- a photodetector;
characterised by the feature that the, or each, optical radiation transmitter is a single transverse mode laser transmitter and that the transmission signals used are radio frequency signals.

The preferred method of restricting the number of modes excited in the fibre is by means of coupling light into the fibre using a launch that is co-linear but at an offset to the fibre axis.

Preferably in such an optical communication system where the fibre has a core diameter of 62.5µm and where the offset distance measured from the centre of the multimode fibre core to the centre of the optical radiation emitted from the transmitter is from approximately 10 µm to approximately 30 µm.

Especially preferred is an optimum offset distance from approximately 23 µm to approximately 30 µm.

Other features of the invention will become apparent from the description which follows.

### Brief Description of the Drawings

The present invention will now be described more particularly with reference to the accompanying drawings which show, by way of example only, a preferred embodiment of the optical communication system according to the invention.

In the drawings:
Figure 1 presents an experimental configuration for demonstrating the preferred embodiment according to the invention.
Figure 2 presents experimental results achieved with the experimental configuration of Figure 1 comparing EVM and offset position over a short link low performance fibre.
Figure 3 presents experimental results achieved with the experimental configuration of Figure 1 performing the experiment as in Figure 2 but additionally varying offset in the z direction, defined as the distance along the extension of the fibre axis towards the optical radiation transmitter.
Figure 4 presents experimental results achieved with the experimental configuration of Figure 1 with a laser temperature of 85°C.
Figure 5 presents experimental results comparing EVM in multiple multimode fibres when exited by an offset launch and by a centre launch.

### Detailed Description of the Drawings

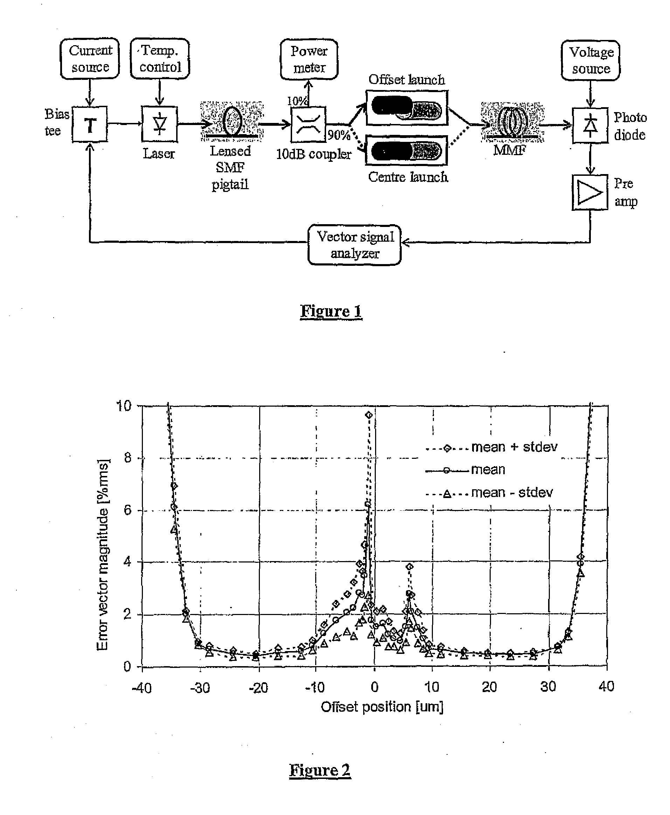

Referring to the drawings and initially to Figure 1, the preferred embodiment of the Optical Communications System 11. according to the invention comprises a signal input means 12, an optical radiation source 13, temperature monitoring means 14, a lensed single mode fibre (SMF) 15, a fibre-to-fibre coupler 16, a power monitoring means 17, launching means 18, a multimode fibre 19, a photodetector 20, signal amplification means 21, signal analysing means 22, a current source 23 and a voltage source 24 when configured for testing and evaluation of a plurality of launch conditions and fibre responses.

The effect of restricted launch on the transmission of high frequency radio signals over 'worst-case' multimode fibre using a complex digital modulation format (32-QAM) was measured in a series of experiments in order to determine the best strategy for ensuring good quality radio over fibre transmission over multimode fibre. In each case the offset launch gave better performance with less variability over time than centre launch indicating that offset launch in multimode fibre networks guarantees successful radio transmission without outages over 'worst-case' multimode fibre. Error vector magnitude (EVM) was used as the link performance metric in this series of measurements.

The optical radiation source 13 is a single transverse mode laser. The laser 13 is an uncooled 1300nm distributed feedback (DFB) device designed for 10 Gigabit Ethernet applications.

Light from the laser 13 was coupled into a lensed single mode fibre 15 and the alignment was controlled using a 90/10 coupler 16 and monitored for power losses 17.

A precision xyz-stage was used to control the launch conditions into various combinations of reels of 'worst-case' multimode fibre 19.

Experimental results shown in Figures 2 to 4 were achieved using 500m runs of 'worst-case' multimode fibre having a 62.5µm core diameter and a numerical aperture of 0.28.

The photodetector 20 is a photodiode. The photodiode 20 having a multimode fibre 19 input and an electrical preamplifier 21 output stage form the optical receiver converting the low intensity modulated light back into an electrical signal.

The signal analysing means 21 has the ability to both generate and demodulate a 32-QAM signal at a centre frequency of 2GHz with a symbol rate of 2Ms/s. 32-QAM modulation was chosen to provide a good test of the link performance as it requires a signal-to-noise ratio of more than 25dB and is representative of wireless voice and data communication modulation systems.

Figure 2 shows error vector magnitude (EVM) as a function of offset position. The laser 13 was operated at a bias current of 50mA and at a temperature of 25°C. The solid line in this plot shows the mean value of EVM calculated from repeated measurements over a time period of a few minutes. The mean value plus and minus one standard deviation (broken lines) showing variability in performance over time are also plotted.

From Figure 2 it can be seen that the most stable region of operation is at an offset position of between 10 and 30µm. In this region the EVM and the variability of EVM over time are both very low. There is also a very narrow region near the centre of the plot that has low EVM but it is surrounded by regions of unacceptable performance resulting in it not being possible to achieve acceptable performance for centre launch with any degree of repeatability using worst-case multimode fibre.

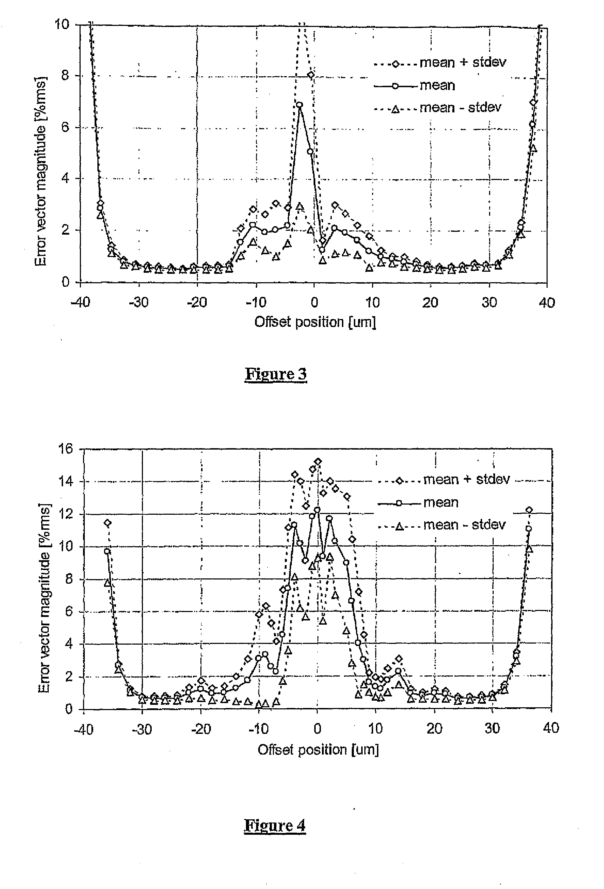

With reference to Figure 3, the previous experiment was repeated monitoring the effect of a small offset (3µm in the z direction). Good centre launch performance is even more difficult to obtain than previously, whereas the offset launch performance is just as good and as stable as before.

Figure 4 shows the EVM performance of the link as a function of the offset position with a laser temperature of 85°C. The link performance is even worse near the centre, whereas offset launch is still very effective between 15 and 30µm offsets. The reason for the deterioration of performance at centre launch is thought to be due to the shift in operating wavelength with temperature (which changes the dispersion properties of the fibre) rather than a reduction in laser linearity.

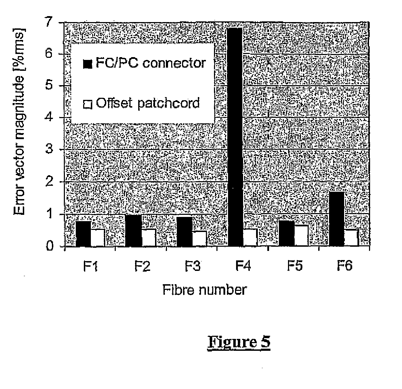

Figure 5 shows how EVM varies with six different fibres, each 300m long, for either centre launch (using standard FC/PC connectors) or offset launch (using an offset launch patchcord). These fibres were the same as used for the standardisation of the offset launch technique described in the Gigabit Ethernet standard, IEEE 802.3z, 1998. All six fibres had core diameters of 62.5µm and bandwidths near the specified limit of 500MHz.km at 1300nm wavelength. From this figure it can be seen that offset launch produces a better and more consistent performance for all of the fibres used.

When all six fibres were connected together giving a total link length of 1.8km the measured EVM was 6.1% with a standard deviation of 1.4% using a centre launch compared to an EVM of 1.6% with a standard deviation of less than 0.4% when the offset launch patchcord was used.

Minimum EVM degradation correlates to smoothing of the RF transmission region beyond the 3dB bandwidth specification of the multimode fibre. As a result of this effect susceptibility of signal loss due to transmission nulls is substantially eliminated.

The metrics for quality include, but are not restricted to:
- spurious free dynamic range (SFDR);
- error vector magnitude (EVM);
- and the variability of these parameters over time (to ensure that no outages occur).

Types of graded-index multimode fibre that can be used include, but are not restricted to:
- old fibre that has been installed within buildings;
- new fibre;
- silica fibre;
- plastic fibre;
- fibre with multiples splices and/or connectors;
- fibre with low specified bandwidth; and
- fibre with high specified bandwidth.

The means of coupling include, but are not restricted to:
- a launch from a single transverse mode laser with a single mode fibre pigtail into a gxaded-index multimode fibre using a mode-conditioning patchcord;
- a launch from a laser receptacle package into a graded-index multimode fibre where the axis of the optical output from a single transverse mode laser has been offset from that of the fibre.

The scope of the invention is defined by the claims which now follow.

## Claims

1. A distributed antenna system comprising an analogue optical link formed by a length of multimode fibre having imperfections in the refractive index profile of the fibre core, a laser diode, a photodiode for detecting light from the fibre and a launch for launching light from the laser diode into the multimode fibre to provide a restricted number of modes selected to provide a stable operating regime in the fibre

2. A system according to claim 1, wherein the modes are selected to allow transmission in a region beyond the 3dB bandwidth specification of the multimode fibre

3. A system according to claim 1 or 2, wherein the selected modes are higher order modes, without the low order modes achieved by central launch.

4. A system according to claim 1 2 or 3, wherein the light is launched at an offset from the fibre centre.

5. A system according to any preceding claim wherein the launch is one of a launch from a single transverse mode laser with a single mode fibre pigtail into a graded-index multimode fibre using a mode- conditioning patchcord, and a launch from a laser receptacle package into a graded-index multimode fibre where the axis of the optical output from a single transverse mode laser has been offset from that of the fibre.

6. A method of operating a distributed antenna system having an analogue optical link formed by a length of multimode fibre having imperfections in the refractive index profile of the fibre core, a laser diode, and a photodiode for detecting light from the fibre; **characterized by** launching light from the laser diode into the multimode fibre to provide a restricted number of modes selected to provide a stable operating regime in the fibre.
